Europäisches Patentamt

European Patent Office

Office européen des brevets

(19)

(11) **EP 1 259 019 A2**

(12) # DEMANDE DE BREVET EUROPEEN

(43) Date de publication:
**20.11.2002 Bulletin 2002/47**

(51) Int Cl.[7]: **H04L 1/00**, H04B 7/005

(21) Numéro de dépôt: 02291187.9

(22) Date de dépôt: **13.05.2002**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **14.05.2001 FR 0106308**

(71) Demandeur: **EVOLIUM S.A.S.**
**75008 Paris (FR)**

(72) Inventeur: **Agin, Pascal**
**94370 Sucy en Brie (FR)**

(74) Mandataire: **El Manouni, Josiane**
**COMPAGNIE FINANCIERE ALCATEL**
**Dépt. Propr. Industrielle,**
**30, avenue Kléber**
**75116 Paris (FR)**

(54) **Procédé pour fixer des paramètres d'adaption de débit spécifiques à chaque service dans un système de radiocommunications mobiles**

(57)     Un des objets de la présente invention est un procédé pour fixer des paramètres d'adaptation de débit spécifiques à chaque service dans un système de radiocommunications mobiles, procédé selon lequel lesdits paramètres sont fixés les uns par rapport aux autres approximativement en proportion des valeurs $E_b/N_0$ cible correspondantes, la valeur $E_b/N_0$ cible pour un service donné correspondant au rapport énergie par bit-sur-bruit nécessaire pour atteindre la qualité de service cible requise pour ce service.

FIG_1

Printed by Jouve, 75001 PARIS (FR)

# Description

La présente invention concerne d'une manière générale les systèmes de radiocommunications mobiles.

D'une manière générale, les évolutions technologiques conduisent à distinguer deux types de systèmes, les systèmes dits de deuxième génération, tels que notamment le système GSM (« Global System for Mobile communications ») et les systèmes dits de troisième génération, tels que notamment le système UMTS (pour "Universal Mobile Telecommunication System").

Contrairement aux systèmes de deuxième génération qui sont optimisés pour un seul type de service, en l'occurrence la voix, les systèmes de troisième génération sont bien adaptés pour fournir des services de type multimédia, par exemple voix et Internet sont possibles simultanément.

Dans les systèmes de troisième génération tels que notamment le système UMTS, on définit généralement différents canaux dits de transport (ou TrCH, pour « Transport CHannels » en anglais), pour différents services, ce qui permet de les différencier, en termes de qualité de service, de priorité, ...etc.

Selon l'organisation en couches généralement utilisée pour décrire ces systèmes, ces canaux de transport sont traités, en vue de leur transmission sur l'interface radio, dans une couche appelée couche physique. Dans la couche physique, chaque TrCH est traité selon un schéma de codage qui lui est propre (ce schéma de codage incluant notamment un codage-canal et un entrelacement), puis les différents TrCHs ainsi traités sont multiplexés temporellement pour former un canal de transport composite codé, ou CCTrCH (« Coded Composite Transport Channel »). Ce CCTrCH est ensuite traité, avant transmission à une certaine puissance sur un ou plusieurs canaux physiques, ce traitement incluant notamment un entrelacement et une mise au format de transmission sur ce ou ces canaux physiques. Pour plus d'informations sur ces aspects de l'UMTS, on pourra se référer notamment à la spécification 3GPP TS 25.212.

En l'occurrence, dans un système tel que l'UMTS, tous les bits (pour tous les services) transmis sur un même canal physique sont transmis avec une même puissance d'émission. En effet, à cause de l'entrelacement, il n'est pas possible de distinguer les bits de chaque service dans ce canal physique.

Cependant différents services peuvent requérir différentes qualités de service. Par exemple pour la voix le taux d'erreur requis BER (« Bit Error Rate ») est typiquement de $10^{-3}$, alors que pour les données le taux d'erreurs requis est beaucoup plus faible, typiquement $10^{-6}$.

Une possibilité serait alors de fixer la puissance d'émission à une valeur suffisante pour que la qualité de service cible soit assurée pour tous les services. Cependant ceci n'est pas optimal car de la puissance serait alors inutilement gaspillée pour le ou les services qui requièrent une faible qualité de service.

C'est pourquoi la norme 3GPP prévoit une autre possibilité, consistant dans une adaptation de débit spécifique à chaque service, en plus de l'adaptation de débit effectuée par ailleurs pour adapter le débit à transmettre au débit offert pour sa transmission. On rappelle que l'adaptation de débit est obtenue au moyen de techniques telles que répétition et/ou poinçonnage, le taux d'adaptation de débit étant alors défini comme le taux de répétition et/ou de poinçonnage.

Ainsi, selon la norme 3GPP, chaque canal de transport peut avoir un paramètre spécifique, appelé aussi « rate-matching attribute» (en anglais). Ce paramètre noté RM est un nombre entier (compris entre 1 et 256), qui permet de paramétrer l'adaptation de débit qui est faite pour tous les canaux de transport simultanément dans la couche physique, et d'avoir une plus grande énergie par bit pour un canal de transport que pour un autre, en utilisant une plus grande valeur de ce paramètre pour un canal de transport qui requiert une meilleure qualité de service. Pour plus d'informations sur ces aspects de l'UMTS, on pourra se référer notamment aux spécifications 3GPP TS 25.212 et 3GPP TS 25.331.

Ce principe étant posé, un problème se pose en pratique pour déterminer les valeurs à utiliser pour ces paramètres d'adaptation de débit spécifiques à chaque service.

Une possibilité serait de déterminer ces valeurs par simulation, en testant toutes les valeurs possibles, et en choisissant parmi ces valeurs celles permettant d'atteindre la qualité de service cible pour chaque service, et ceci pour toutes les combinaisons de services possibles. Une telle solution a cependant pour inconvénient d'être très longue à mettre en oeuvre, et de nécessiter un volume mémoire important pour stocker toutes les données ainsi obtenues.

Une autre possibilité est indiquée dans le document WO 00/62465. Ce document indique qu'un des canaux de transport (par exemple le canal de transport qui transporte la signalisation dédiée) est sélectionné comme canal de transport de référence, et qu'un décalage d'adaptation de débit de chaque canal de transport par rapport au canal de référence est déterminé. Ce document indique aussi que les décalages d'adaptation de débit pourraient être des représentations de différences de qualité désirées entre canaux de transport, et que les différences de qualité désirées pourraient être représentées par des différences de rapport $E_b/N_0$ cible (où $E_b/N_0$ désigne le rapport énergie par bit-sur-bruit) sans adaptation spécifique de débit des canaux de transport.

Cependant ce document ne fournit pas de solution effective pour déterminer les valeurs à utiliser pour ces paramètres d'adaptation de débit spécifiques à chaque service.

Un des buts de la présente invention est de fournir une solution effective pour fixer de tels paramètres, qui permette en particulier d'obtenir des valeurs optimales pour ces paramètres, tout en étant simple à mettre en oeuvre, et non coûteuse en temps et en volume mémoire nécessaires.

Une autre possibilité est mentionnée dans le document WO 99/53628. Ce document mentionne qu'une telle adaptation de débit spécifique à chaque service peut être contrôlée en fonction d'un signal reçu du récepteur.

Ce document ne fournit cependant aucun enseignement pour la réalisation d'un tel contrôle, et ne fournit aucune solution pour fixer de cette façon les paramètres d'adaptation de débit spécifiques à chaque service.

Un autre but de la présente invention est de proposer différentes solutions pour un tel contrôle, permettant notamment de fixer de façon optimale de tels paramètres.

Un autre but de la présente invention est aussi de réaliser un tel contrôle en liaison avec le contrôle de puissance effectué par ailleurs dans ces systèmes.

On rappelle en effet qu'une technique couramment utilisée dans ces systèmes est la technique dite de contrôle de puissance, et notamment la technique de contrôle de puissance dite en boucle fermée (ou "closed loop power control" en anglais).

Le but du contrôle de puissance en boucle fermée est de maintenir, pour chaque liaison entre une station de base et une station mobile, un paramètre représentatif de la qualité de transmission sur cette liaison (tel que par exemple le rapport signal-sur-interférence, ou SIR, pour "Signal-to-Interference Ratio" en anglais) le plus proche possible d'une valeur cible. Par exemple, dans le sens montant (c'est-à-dire de la station mobile vers la station de base), la station de base estime périodiquement le SIR et compare le SIR estimé à la valeur SIR cible (ou "target SIR" en anglais). Si le SIR estimé est inférieur au SIR cible, la station de base demande à la station mobile d'augmenter sa puissance d'émission. Au contraire, si le SIR estimé est supérieur au SIR cible, la station de base demande à la station mobile de diminuer sa puissance d'émission.

La valeur SIR cible est généralement choisie en fonction de la qualité de service requise, et est couramment ajustée par un algorithme dit de boucle externe (par opposition à l'algorithme précédent dit aussi algorithme de boucle interne). Le principe de l'algorithme de boucle externe est d'estimer régulièrement la qualité de service et de comparer la qualité de service estimée à la qualité de service requise. La qualité de service est généralement représentée par un taux d'erreur bit (ou BER, pour "bit error rate" en anglais) ou par un taux d'erreur trame (ou FER, pour "frame error rate" en anglais), ou encore par un taux d'erreur bloc (ou BLER, pour "block error rate" en anglais). Si la qualité de service estimée est inférieure à la qualité de service requise, le SIR cible est accru, sinon, le SIR cible est réduit.

Un des objets de la présente invention est un procédé pour fixer des paramètres d'adaptation de débit spécifiques à chaque service dans un système de radiocommunications mobiles, ce procédé étant essentiellement tel que lesdits paramètres sont fixés les uns par rapport aux autres approximativement en proportion des valeurs $E_b/N_0$ cible correspondantes, la valeur $E_b/N_0$ cible pour un service donné correspondant au rapport énergie par bit-sur-bruit nécessaire pour atteindre la qualité de service cible requise pour ce service.

Suivant une autre caractéristique, lesdites valeurs $E_b/N_0$ cible sont des valeurs estimées.

Suivant une autre caractéristique, lesdits paramètres sont ainsi fixés à chaque nouvelle initialisation d'au moins un service.

Suivant une autre caractéristique, une valeur de paramètre de référence est fixée pour un desdits services.

Suivant une autre caractéristique, ledit service de référence est celui ayant la valeur $E_b/N_0$ cible la plus élevée.

Suivant une autre caractéristique, ladite valeur de paramètre de référence correspond à une valeur maximale pour lesdits paramètres.

Un autre objet de la présente invention est un procédé pour fixer des paramètres d'adaptation de débit spécifiques à chaque service dans un système de radiocommunications mobiles, ce procédé étant essentiellement tel que lesdits paramètres sont ajustés dynamiquement de manière à minimiser la puissance d'émission permettant d'atteindre la qualité de service cible requise pour chaque service.

Suivant une autre caractéristique, un contrôle de puissance d'émission est prévu, et une valeur cible de qualité de transmission, prise comme référence commune auxdits services pour ledit contrôle de puissance d'émission, est ajustée dynamiquement de manière à ce qu'une qualité de service cible de référence soit atteinte dans tous les cas.

Suivant une autre caractéristique, ladite qualité de transmission est représentée par le rapport signal-sur-interférence (SIR).

Suivant une autre caractéristique, ladite qualité de service cible de référence correspond à la qualité de service cible requise pour un des services, dit service de référence.

Suivant une autre caractéristique, ledit service de référence est celui qui requiert la plus grande énergie par bit transmis.

Suivant une autre caractéristique, ladite qualité de service cible de référence correspond à une qualité de service cible suffisante pour atteindre la qualité de service cible requise pour tous les services.

Suivant une autre caractéristique, une valeur de paramètre dite de référence est associée à ladite qualité de service cible de référence.

Suivant une autre caractéristique, ladite valeur de paramètre de référence correspond à la valeur maximale pour lesdits paramètres.

Suivant une autre caractéristique, lesdits paramètres ne sont ajustés que si la qualité de service de référence est suffisamment proche de la qualité de service cible de référence.

Suivant une autre caractéristique, ladite qualité de service cible de référence correspondant à la qualité de service cible requise pour un des services, dit service de référence, ledit ajustement de valeur cible de qualité de transmission est tel que cette valeur cible de qualité de transmission est augmentée jusqu'à ce que la qualité de service cible requise pour ledit service de référence soit atteinte.

Suivant une autre caractéristique, ladite qualité de service cible de référence correspondant à la qualité de service cible requise pour un des services, dit service de référence, ledit ajustement de valeur cible de qualité de transmission est en outre tel que cette valeur cible de qualité de transmission est diminuée tant que la qualité de service requise pour ledit service de référence est atteinte.

Suivant une autre caractéristique, ladite qualité de service cible de référence correspondant à une qualité de service cible suffisante pour atteindre la qualité de service cible requise pour tous les services, ledit ajustement de valeur cible de qualité de transmission est tel que cette valeur cible de qualité de transmission est augmentée jusqu'à ce que cette qualité de service cible suffisante pour tous les services soit atteinte.

Suivant une autre caractéristique, ladite qualité de service cible de référence correspondant à une qualité de service suffisante pour atteindre la qualité de service requise pour tous les services, ledit ajustement de valeur cible de qualité de transmission est en outre tel que cette valeur cible de qualité de transmission est diminuée tant que cette qualité de service cible suffisante pour tous les services reste atteinte.

Suivant une autre caractéristique lesdits paramètres ne sont ajustés que si la qualité de transmission estimée est suffisamment proche de la valeur cible de qualité de transmission.

Suivant une autre caractéristique, chacun desdits paramètres est ajusté dynamiquement, en fonction d'un indicateur de qualité de service correspondant.

Suivant une autre caractéristique, certains seulement desdits paramètres, ou premiers paramètres, sont ajustés dynamiquement, en fonction d'indicateurs de qualité de service correspondants, les autres paramètres, ou deuxièmes paramètres, étant fixés en fonction des premiers paramètres ainsi ajustés.

Suivant une autre caractéristique, lesdits deuxièmes paramètres sont fixés de manière à garder approximativement constant le rapport $RM_i/RM_0$, où $RM_i$ est un deuxième paramètre, et $RM_0$ est un paramètre de référence.

Suivant une autre caractéristique, le rapport $RM_i/RM_0$ est fixé approximativement en proportion des valeurs $E_b/N_0$ cible correspondantes, la valeur $E_b/N_0$

cible correspondant au rapport énergie par bit-sur-bruit nécessaire pour atteindre la qualité de service cible requise correspondante.

Suivant une autre caractéristique, ledit paramètre de référence correspond à l'un desdits premiers paramètres.

Un autre objet de la présente invention est un procédé pour ajuster une valeur cible de qualité de transmission pour le contrôle de puissance d'émission dans un système de radiocommunications mobiles, ce procédé étant essentiellement tel que, une valeur cible de qualité de transmission étant prise comme référence commune à différents services pour ledit contrôle de puissance d'émission, ledit ajustement est tel que ladite valeur cible de qualité de transmission est augmentée jusqu'à ce que la qualité de service cible requise pour chaque service soit atteinte.

Suivant une autre caractéristique, ledit ajustement est en outre tel que ladite valeur cible de qualité de transmission est diminuée dès que la qualité de service cible requise est atteinte pour au moins un des services.

La présente invention a également pour objet :

- une station mobile (notamment UE, pour « User Equipment » dans un système tel que l'UMTS),
- un équipement de réseau de radiocommunications mobiles(notamment une station de base telle que Node B dans un système tel que l'UMTS, ou encore un contrôleur de stations de base tel que RNC(« Radio Network Controller ») dans un système tel que l'UMTS),
- un réseau de radiocommunications mobiles,
- un système de radiocommunications mobiles,
- tous comportant des moyens pour mettre en oeuvre les divers procédés ci-dessus, individuellement ou en combinaison.

D'autres objets et caractéristiques de la présente invention apparaîtront à la lecture de la description suivante d'exemples de réalisation, faite en relation avec les dessins ci-annexés dans lesquels:

- la figure 1 est destinée à illustrer un exemple d'émetteur pour système de radiocommunications mobiles, utilisant un premier procédé suivant l'invention,
- la figure 2 est destinée à illustrer un exemple d'émetteur pour système de radiocommunications mobiles, utilisant un deuxième procédé suivant l'invention.

On rappelle qu'une caractéristique d'un système tel que l'UMTS est la possibilité de transporter plusieurs services sur une même connexion. Ces services sont distingués au moyen de canaux de transport (ou TrCH, pour "Transport Channels" en anglais). Ces canaux de transport sont traités séparément selon un schéma de codage canal (incluant un codage détecteur d'erreurs, un codage correcteur d'erreurs, une adaptation de débit, et un entrelacement) avant d'être multiplexés temporellement pour former un canal de transport composite codé (ou CCTrCH, pour "Coded Composite Transport Channel" en anglais) à transmettre sur un ou plusieurs canaux physiques. Plus d'informations sur ces aspects de l'UMTS peuvent être trouvés dans la spécification 3G TS25 212 publié par le 3GPP.

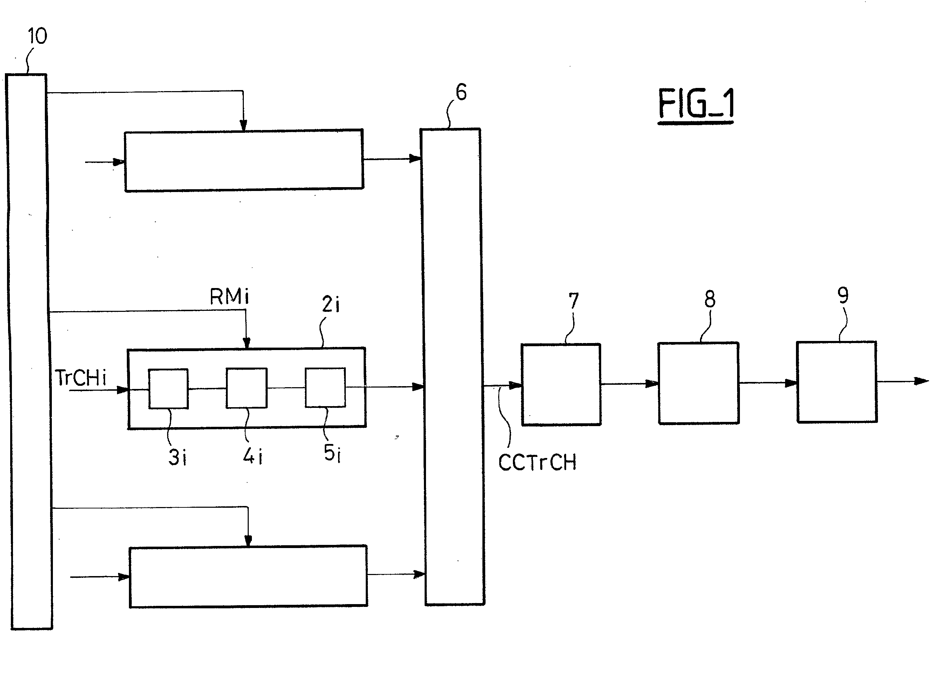

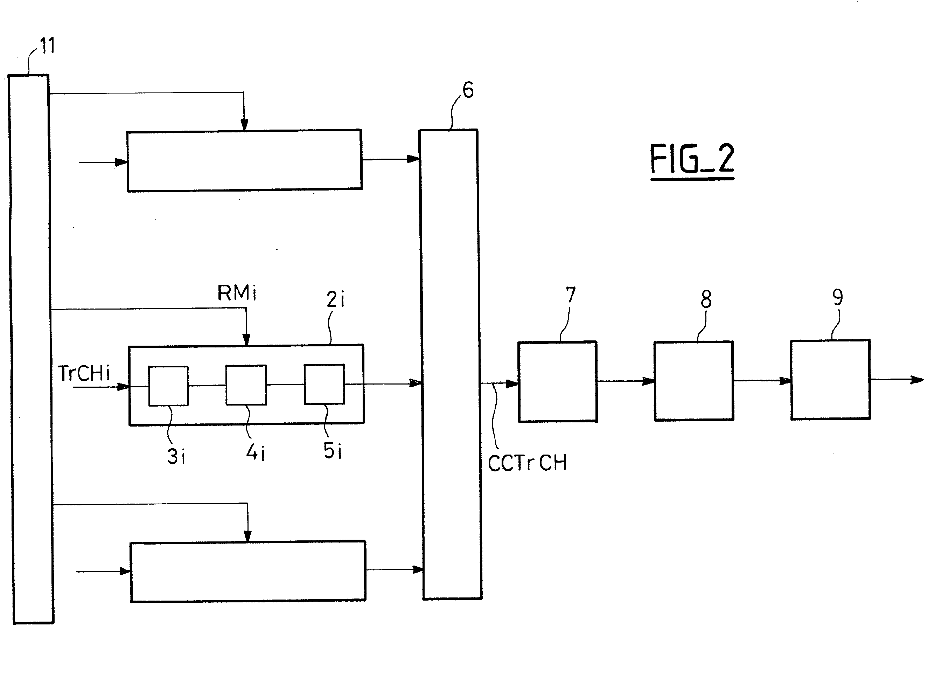

La structure d'un émetteur correspondant est rappelée sur les figures 1 et 2 ; elle comporte ainsi, essentiellement:

- pour chaque canal de transport TrCHi (avec i=1, ... N où N est le nombre de services, ou canaux de transport, qui sont multiplexés pour former un CCTrCH), des moyens de codage-canal 2i incluant eux-mêmes des moyens de codage correcteur d'erreurs 3i, des moyens d'adaptation de débit 4i, et des moyens d'entrelacement 5i,
- des moyens 6 de multiplexage des différents canaux de transport tels que TrCHi ainsi traités par les différents moyens de codage-canal tels que 2i, en un canal de transport composite codé CCTrCH,
- des moyens 7 de traitement du canal de transport composite codé CCTrCH ainsi obtenu,
- des moyens 8 d'étalement de spectre et de modulation,
- des moyens 9 d'émission radio-fréquence.

Bien que non illustrée spécifiquement, la structure d'un récepteur se déduit de celle de l'émetteur en prévoyant, dans un ordre inverse, des moyens réalisant des fonctions inverses de celles réalisées à l'émission. Des paramètres d'adaptation de débit fixés suivant l'invention peuvent être utilisés aussi bien en émission qu'en réception.

Comme rappelé dans l'introduction, chaque canal de transport TrCHi peut avoir un paramètre d'adaptation de débit spécifique (ou « rate-matching attribute» en anglais). Ce paramètre, noté $RM_i$, permet de paramétrer l'adaptation de débit qui est faite pour tous les canaux de transport simultanément dans la couche physique. Ce paramètre permet d'avoir une plus grande énergie par bit pour un canal de transport que pour un autre, en utilisant une valeur de ce paramètre plus grande pour un canal de transport qui requiert une meilleure qualité de service.

La présente invention propose différentes approches pour fixer des paramètres d'adaptation de débit spécifiques à chaque service.

La présente invention propose une première approche, suivant laquelle lesdits paramètres sont fixés les uns par rapport aux autres, approximativement en proportion des valeurs $E_b/N_0$ cible correspondantes, la valeur $E_b/N_0$ cible pour un service donné correspondant au rapport énergie par bit-sur-bruit nécessaire pour atteindre la qualité de service cible requise pour ce service.

En d'autres termes, l'invention suggère de dériver des valeurs optimales des paramètres d'adaptation de débit spécifiques à chaque service, pour toutes les combinaisons de services, en fonction du rapport ($E_b/N_0$) cible pour chaque service. De nouvelles valeurs sont ainsi fixées pour ces différents paramètres à chaque initialisation d'un nouveau service. Sinon ces paramètres restent inchangés.

En d'autres termes encore, l'invention suggère de déterminer les paramètres $RM_i$ de telle sorte que le rapport $\frac{RM_i}{RM_j}$ soit approximativement égal au rapport $\frac{(E_b/N_0)_i}{(E_b/N_0)_j}$ pour tout couple de services (i, j).

($E_b/N_0$)_i est le ($E_b/N_0$) cible pour le i^ème service (avec i=1, ..., N), c'est-à-dire le rapport moyen énergie par bit transmis-sur-bruit, nécessaire pour atteindre la qualité de service requise pour le i^ème service. Il est mesuré en réception et est exprimé en unité linéaire. Il peut être mesuré suivant des techniques classiques qui ne nécessitent pas d'être redécrites ici.

Les rapports $E_b/N_0$ cible pour les différents services considérés peuvent être estimés pour chacun de ces services pris isolément.

Ces $E_b/N_0$ cible peuvent être estimés dans différentes conditions:

- simulations,
- mesures dans les conditions réelles,
- ...etc.

Sur la figure 1 sont ainsi illustrés des moyens notés 10 permettant de fournir des paramètres $RM_i$ fixés les uns par rapport aux autres sensiblement en proportion des valeurs $E_b/N_0$ cible correspondantes.

Une valeur de paramètre de référence, notée $RM_0$ peut être fixée pour un des services. Par exemple on peut choisir un TrCH de référence, par exemple $TrCH_0$, et fixer la valeur correspondante $RM_0$ de manière arbitraire. Par exemple, on peut choisir pour $TrCH_0$ le TrCH ayant la valeur $E_b/N_0$ cible la plus élevée, et on peut alors choisir par exemple la valeur $RM_0$ égale à 256 (soit la valeur maximale dans le cas du système UMTS par exemple). Puis on choisit alors chaque $RM_i$ de telle sorte que le rapport $\frac{RM_i}{RM_0}$ soit approximativement égal au rapport $\frac{(E_b/N_0)_i}{(E_b/N_0)_0}$. Ceci suffit à faire en sorte que le rapport $\frac{RM_i}{RM_j}$ soit approximativement égal au rapport $\frac{(E_b/N_0)_i}{(E_b/N_0)_j}$ pour tout couple de services (i, j).

Suivant la norme 3GPP, les paramètres $RM_i$ et $RM_i$ sont des entiers pouvant prendre n'importe quelle valeur entre 1 et 256. Ainsi le nombre de valeurs possibles du rapport $\frac{RM_i}{RM_j}$ est limité. Pour cette raison notamment, la relation :

$$\frac{RM_i}{RM_0} = \frac{(E_b/N_0)_i}{(E_b/N_0)_j}.$$

peut ne pas être vérifiée exactement (mais seulement approximativement) et les paramètres $RM_i$ et $RM_j$ doivent être choisis tels que $\frac{RM_i}{RM_j}$ soit aussi proche que possible du rapport $\frac{(E_b/N_0)_i}{(E_b/N_0)_j}$, ou le plus grand (respectivement le plus petit) entier au dessous (respectivement au dessus) du rapport $\frac{(E_b/N_0)_i}{(E_b/N_0)_j}$.

Théoriquement cette façon de fixer les paramètres d'adaptation de débit spécifiques à chaque service permet d'atteindre la qualité de service cible pour tous les canaux de transport simultanément, c'est-à-dire il existe une certaine puissance P telle que lorsque la puissance est supérieure à P la qualité de service QoS est atteinte pour tous les services, et lorsque la puissance est inférieure à P la qualité de service QoS n'est atteinte pour aucun service.

En pratique la qualité de service QoS de tous les services ne sera probablement pas atteinte exactement au même moment car les $E_b/N_0$ cible doivent être estimés, mais tous les QoS seront atteints pour une puissance qui sera significativement plus petite que si les paramètres d'adaptation de débit n'avaient pas été optimisés de cette façon.

Une difficulté avec l'approche précédente est que le $E_b/N_0$ dépend de beaucoup de facteurs tels que l'environnement et la vitesse. Cependant, habituellement ces variations ne sont pas très importantes, de sorte qu'une valeur moyenne pourrait être utilisée par exemple, ou la plus grande des valeurs $E_b/N_0$ cible en considérant plusieurs environnements et vitesses, dans une approche plus conservatrice.

Ainsi, une seconde approche peut être considérée au lieu de la précédente, qui adapte dynamiquement les paramètres d'adaptation de débit spécifiques à chaque service (ou canal de transport), de manière que la qualité de service de chaque canal de transport soit aussi proche que possible de la qualité de service respective. L'avantage d'une telle approche est de ne pas nécessiter d'estimation du $E_b/N_0$ cible et d'adapter dynamiquement les paramètres d'adaptation de débit spécifiques à chaque service aux changements d'environnement, de vitesse, ...etc.

Ainsi, la présente invention propose une deuxième approche, suivant laquelle lesdits paramètres sont ajustés dynamiquement de manière à minimiser la puissance d'émission permettant d'atteindre la qualité de service cible requise pour chaque service.

En d'autres termes, la présente invention suggère d'adapter dynamiquement les paramètres d'adaptation de débit spécifiques à chaque service, en fonction de la qualité estimée en réception, de manière similaire à la boucle externe de contrôle de puissance.

Sur la figure 2 sont ainsi illustrés des moyens notés 11 permettant de fournir des paramètres $RM_i$ qui sont ajustés dynamiquement de manière à minimiser (ou au moins diminuer significativement) la puissance d'émission permettant d'atteindre la qualité de service cible requise pour chaque service.

On peut en outre prévoir qu'une valeur cible de qualité de transmission, prise comme référence commune auxdits services pour le contrôle de puissance d'émission, soit ajustée dynamiquement de manière à ce qu'une qualité de service cible de référence soit atteinte dans tous les cas. La qualité de transmission est notamment représentée par le rapport signal-sur-interférence (SIR).

Suivant un premier mode de réalisation, ladite qualité de service cible de référence correspond à la qualité de service cible requise pour un des services, dit service de référence.

Avantageusement, ledit service de référence est celui qui requiert la plus grande énergie par bit transmis.

Suivant un deuxième mode de réalisation, ladite qualité de service cible de référence correspond à une qualité de service cible suffisante pour atteindre la qualité de service cible requise pour tous les services.

Le premier mode de réalisation (tel que défini précédemment, c'est-à-dire pour lequel la qualité de service cible de référence correspond à la qualité de service cible requise pour un service de référence) peut alors être décrit par exemple de la manière suivante.

Soit $Q_i$ la valeur d'un indicateur de qualité de service pour le $i^{ème}$ canal de transport et $(Q_i)_{target}$ la valeur cible de cet indicateur (le signe de $Q_i$ est choisi tel que $Q_i < (Q_i)_{target}$ signifie que la qualité est moins bonne que la qualité cible, c'est-à-dire que la puissance doit être augmentée). Habituellement, les indicateurs de qualité de service (tels que BER, BLER, BER brut, SIR, ...etc) des différents canaux de transport sont identiques mais ils peuvent être différents.

Le procédé comporte par exemple les étapes suivantes :

- La boucle externe de contrôle de puissance est effectuée sur un canal de transport de référence, par exemple le premier canal de transport ($TrCH_0$). N'importe quel algorithme ayant pour but de rendre $Q_0$ aussi proche que possible de $(Q_0)_{target}$ peut être utilisé.

- Périodiquement on vérifie si $Q_i$ est proche de $(Q_i)_{target}$ pour les autres canaux de transport (i>0). La périodicité peut être différente de celle de l'algorithme de boucle externe.

  • Si $(Q_i - (Q_i)_{target} < \eta_i)$, le rapport $RM_i / RM_0$ est augmenté.
  • Si $(Q_i - (Q_i)_{target} > \eta'_i)$, le rapport $RM_i / RM_0$ est diminué.

$\eta_i$ et $\eta'_i$ sont des paramètres de l'algorithme qui ont pour but d'éviter de changer les paramètres d'adaptation de débit trop fréquemment. Habituellement, $\eta_i \leq 0$ et $\eta'_i \geq 0$.

Le rapport $RM_i/RM_0$ peut être augmenté ou diminué en changeant un ou plusieurs des paramètres $RM_i$ avec $i \geq 0$. N'importe quelle règle pour les changer est possible: par exemple, ils peuvent être augmentés ou diminués approximativement par un certain facteur

de multiplication $\alpha$, $\alpha$ étant un paramètre de l'algorithme.

Suivant une variante le rapport $RM_i/RM_0$ pourrait n'être modifié que lorsque $Q_0$ est proche de $(Q_0)_{target}$ ou/et lorsque la qualité de transmission estimée (SIR) est proche de la valeur cible de qualité de transmission (SIR cible). En d'autres termes le rapport $RM_i/RM_0$ pourrait n'être modifié que lorsque :

$$|Q_0 - (Q_0)_{t\ arg\ et}| < s$$

ou/et

$$|SIR - SIRcible| < s'$$

où « s » et « s' » sont des paramètres de l'algorithme.

Une bonne solution est que le canal de transport de référence soit le canal de transport qui requiert la plus grande énergie par bit transmis, de manière telle que quand la qualité de service QoS est atteinte pour ce canal de transport, la qualité de service est aussi atteinte pour les autres canaux de transport (au moins lorsque tous les RMi sont égaux). Dans ce cas le paramètre d'adaptation de débit de ce canal de transport peut être fixe et égal à la valeur maximale (256 dans le cas de l'UMTS) puisqu'il devra être plus grand que tous les autres paramètres d'adaptation de débit.

Un avantage de cette solution est qu'à l'initialisation d'un appel, quand tous les $RM_i$ sont fixés à une valeur par défaut (et ont habituellement une valeur égale), lorsque la qualité de service de ce canal de transport est atteinte, elle est atteinte pour tous les canaux de transport.

Ainsi, suivant ce premier mode de réalisation, l'ajustement de ladite valeur cible de qualité de transmission est tel que cette valeur cible de qualité de transmission est augmentée jusqu'à ce que la qualité de service cible requise pour le service de référence soit atteinte.

Ledit ajustement de valeur cible de qualité de transmission est en outre tel que cette valeur cible de qualité de transmission est diminuée tant que la qualité de service requise pour ledit service de référence est atteinte.

Ainsi, dans ce premier mode de réalisation, les moyens notés 11 sur la figure 2 peuvent comporter des moyens pour implémenter l'algorithme ainsi décrit, ou du moins (pour l'exemple de l'émetteur illustré sur la figure 2) la partie de cet algorithme qui est implémentée dans l'émetteur, si une partie de l'algorithme est implémentée dans l'émetteur et une autre partie dans le récepteur.

Le deuxième mode de réalisation (tel que défini précédemment, c'est-à-dire pour lequel la qualité de service cible de référence correspond à une qualité de service cible suffisante pour atteindre la qualité de service cible requise pour tous les services) peut alors être décrit par exemple de la manière suivante.

Au lieu d'être effectuée sur un canal de transport spécifique, la boucle externe de contrôle de puissance est effectuée en considérant tous les canaux de transport, par exemple avec un algorithme tel que le suivant :

- Si $(Q_i - (Q_i)_{target} < \eta_i)$ pour toutes les valeurs de i, le SIR cible est augmenté (par exemple avec un certain pas $\delta_{UP}$)
- Si $(Q_i - (Q_i)_{target} > \eta'_i)$ pour une valeur de i, le SIR cible est diminué (par exemple avec un certain pas $\delta_{DOWN}$)
- Sinon, le SIR cible est inchangé.

$\eta_i$ et $\eta'_i$ sont des paramètres de l'algorithme qui ont pour but d'éviter de changer le SIR cible trop fréquemment. Habituellement, $\eta_i \leq 0$ et $\eta'_i \geq 0$.

Ainsi, suivant ce deuxième mode de réalisation, l'ajustement de ladite valeur cible de qualité de transmission est tel que cette valeur cible de qualité de transmission est augmentée jusqu'à ce que la qualité de service cible suffisante pour tous les services soit atteinte.

Ledit ajustement de valeur cible de qualité de transmission est en outre tel que cette valeur cible de qualité de transmission est diminuée tant que cette qualité de service cible suffisante pour tous les services reste atteinte.

De même, dans ce deuxième mode de réalisation, les moyens notés 11 sur la figure 2 peuvent comporter des moyens pour implémenter l'algorithme ainsi obtenu, ou du moins (pour l'exemple de l'émetteur illustré sur la figure 2) la partie de cet algorithme qui est implémentée dans l'émetteur, si une partie de l'algorithme est implémentée dans l'émetteur et une autre partie dans le récepteur.

L'idée d'un tel algorithme de boucle externe de contrôle de puissance est que le SIR cible est augmenté jusqu'à ce que la qualité de service (ou QoS) cible soit atteinte pour tous les canaux de transport.

En outre, le SIR cible peut être diminué dès que la qualité de service cible est atteinte pour au moins un des canaux de transport.

L'avantage d'une telle solution est qu'elle ne requiert pas de connaître (ou d'estimer) quel est le canal de transport qui requiert la plus grande énergie par bit transmis.

La présente invention a d'ailleurs également pour but une boucle externe de contrôle de puissance basée sur un tel principe.

En d'autres termes, la présente invention a également pour objet un procédé pour ajuster une valeur cible de qualité de transmission pour le contrôle de puissance d'émission dans un système de radiocommunications mobiles, ce procédé étant essentiellement tel que, une valeur cible de qualité de transmission étant prise comme référence commune à différents services pour ledit contrôle de puissance d'émission, ledit ajustement est tel que ladite valeur cible de qualité de transmission est augmentée jusqu'à ce que la qualité de service requise pour chaque service soit atteinte.

En outre, dans l'exemple décrit, ladite valeur cible de qualité de transmission est diminuée dès que la qualité de service requise est atteinte pour au moins un des services.

Dans ce qui précède, les termes « service » et « canal de transport » ont été utilisés indifféremment. On notera cependant qu'il est possible qu'un même service utilise différents canaux de transport. Par exemple, pour la parole utilisant le codage AMR (« Adaptive Multi-Rate »), trois canaux de transport différents sont généralement utilisés : un pour des bits dits de classe A, un pour des bits dits de classe B et un pour des bits dits de classe C, où ces trois classes de bits correspondent à des niveaux d'importance différents des bits. On notera aussi qu'il est possible qu'une qualité de service ne soit pas indiquée pour un canal de transport donné. Par exemple, dans le cas de l'AMR, on cherche généralement à atteindre un taux d'erreurs ou BER (« Bit Error Rate») de $10^{-3}$ pour le TrCH portant les bits de classe A uniquement. Cependant, même dans les cas où une qualité de service n'est pas imposée, on peut fixer une qualité de service de manière plus ou moins arbitraire.

Pour recouvrir ces différentes possibilités, le terme « service » sera utilisé au sens où, d'une manière générale, une certaine qualité de service cible doit être atteinte pour un certain canal de transport, indépendamment de la manière dont sont définis les services et les canaux de transport.

En outre, un exemple d'application important en pratique correspond au cas où on a simultanément une connexion utilisant le codage AMR et une connexion en mode paquet (notamment une connexion paquet à 384 kbps). Dans ce cas cinq canaux de transport (ou DCH, pour « Dedicated CHannel » en anglais) peuvent par exemple être utilisés: trois pour les différentes classes de bits de l'AMR, un pour la connexion paquet, et un canal supplémentaire (tel qu'utilisé habituellement pour la signalisation). Dans ce cas, un indicateur de qualité de service (tel que notamment le BLER) ne peut être estimé que pour le TrCH portant les bits de classe A de l'AMR et pour le TrCH utilisé pour la connexion paquet (donc pour seulement deux TrCHs parmi les quatre TrCHs). Dans ce cas, si on utilise un algorithme tel que décrit plus haut pour l'ajustement dynamique des paramètres RM, cet algorithme ne s'applique que pour les TrCHs pour lesquels l'indicateur de qualité de service peut être estimé. On ne modifie alors dynamiquement que les paramètres RM de ces deux TrCHs (ou premiers paramètres RM). Pour fixer les paramètres RM des deux autres TrCHs (ou deuxièmes paramètres RM) correspondant en l'occurrence aux bits de classe B et C de l'AMR, on peut par exemple utiliser une des méthodes suivantes:

- ces deuxièmes paramètres sont fixes,
- ces deuxièmes paramètres sont fixés, en fonction des premiers paramètres, de manière à garder à peu près constant le rapport $RM_i/RM_0$, où $RM_i$ est un deuxième paramètre, et $RM_0$ est un paramètre de référence, correspondant par exemple au TrCH portant les bits de classe A de l'AMR. Par exemple la valeur de $RM_i/RM_0$ peut être fixée de manière statique, par exemple à l'aide des $E_b/N_0$ comme décrit dans le premier procédé suivant l'invention.

Pour recouvrir ces différentes possibilités, la notion de paramètre de référence suivant l'invention est alors élargie de manière à couvrir aussi bien le cas où le paramètre de référence est le même pour tous les services, que le cas où le paramètre de référence n'est pas le même pour tous les services, et correspond par exemple à un TrCH appartenant au même service que le paramètre qui est à fixer par rapport à ce paramètre de référence.

La présente invention a également pour objet :

- une station mobile (notamment UE, pour « User Equipment » dans un système tel que l'UMTS),
- un équipement de réseau de radiocommunications mobiles(notamment une station de base telle que Node B dans un système tel que l'UMTS,ou encore un contrôleur de stations de base tel que RNC(« Radio Network Controller ») dans un système tel que l'UMTS),
- un réseau de radiocommunications mobiles,
- un système de radiocommunications mobiles,
- tous comportant des moyens pour mettre en oeuvre les divers procédés ci-dessus, individuellement ou en combinaison.

Ces différents moyens peuvent opérer suivant l'un ou l'autre des procédés décrits précédemment; leur réalisation particulière ne présentant pas de difficulté particulière pour l'homme du métier, de tels moyens ne nécessitent pas d'être décrits ici de manière plus détaillée que par leur fonction.

### Revendications

1. Procédé pour fixer des paramètres d'adaptation de débit spécifiques à chaque service dans un système de radiocommunications mobiles, procédé selon lequel lesdits paramètres sont fixés les uns par rapport aux autres approximativement en proportion des valeurs $E_b/N_0$ cible correspondantes, la valeur $E_b/N_0$ cible pour un service donné correspondant au rapport énergie par bit-sur-bruit nécessaire pour atteindre la qualité de service cible requise pour ce service.

**2.** Procédé selon la revendication 1, dans lequel lesdites valeurs $E_b/N_0$ cible sont des valeurs estimées.

**3.** Procédé selon l'une des revendications 1 et 2, dans lequel lesdits paramètres sont ainsi fixés à chaque nouvelle initialisation d'au moins un service.

**4.** Procédé selon l'une des revendications 1 à 3, dans lequel une valeur de paramètre de référence est fixée pour un desdits services, dit service de référence.

**5.** Procédé selon la revendication 4, dans lequel ledit service de référence est celui ayant la valeur $E_b/N_0$ cible la plus élevée.

**6.** Procédé selon l'une des revendications 4 et 5, dans lequel ladite valeur de paramètre de référence correspond à une valeur maximale pour lesdits paramètres.

**7.** Station mobile, comportant des moyens pour mettre en oeuvre un procédé selon l'une des revendications 1 à 6.

**8.** Equipement de réseau de radiocommunications mobiles, comportant des moyens pour mettre en oeuvre un procédé selon l'une des revendications 1 à 6.

**9.** Système de radiocommunications mobiles, comportant des moyens pour mettre en oeuvre un procédé selon l'une des revendications 1 à 6.

FIG_1

EP 1 259 019 A2

FIG_2